Europäisches Patentamt

European Patent Office

Office européen des brevets

(11) Publication number: **0 435 620 B1**

# EUROPEAN PATENT SPECIFICATION

(45) Date of publication of patent specification: **07.09.94**

(51) Int. Cl.⁵: **B60C 11/00**, B60C 9/18, B60C 3/04

(21) Application number: **90314172.9**

(22) Date of filing: **21.12.90**

(54) **A radial tyre for a passenger car.**

(30) Priority: **29.12.89 JP 341265/89**

(43) Date of publication of application:
**03.07.91 Bulletin 91/27**

(45) Publication of the grant of the patent:
**07.09.94 Bulletin 94/36**

(84) Designated Contracting States:
**DE FR GB**

(56) References cited:
**EP-A- 0 194 108
EP-A- 0 292 563
DE-A- 3 222 957
US-A- 4 385 653
US-A- 4 399 853**

(73) Proprietor: **SUMITOMO RUBBER INDUSTRIES
LIMITED
1-1 Tsutsuicho 1-chome
Chuo-ku
Kobe-shi Hyogo-ken (JP)**

(72) Inventor: **Oku, Masahiro
5-6-505 Tamatsukuri-honmachi,
Tennouji-ku
Osaka-shi, Osaka-fu (JP)**

(74) Representative: **Stewart, Charles Geoffrey
SP TYRES UK LIMITED
Tyre Technical Division
Fort Dunlop, Erdington, Birmingham B24 9OT
(GB)**

## Description

The present invention relates to a radial tyre for a passenger car capable of reducing fuel consumption.

Radial tyres are used widely owing to their high steering stability, high speed durability, low noise performance, high wear resistance and low fuel consumption. Recently such tyres have been used at higher internal pressure to further enhance the low fuel consumption property.

When inflated to a high internal pressure, however, the vertical rigidity is increased and a lower envelope performance occurs which results in a loss of ride comfort. This effect is particularly obvious in a tyre of the so-called steel belted type which utilises steel cords in the belt. On the other hand, since the steel belt structure enhances the rigidity of the tread, it improves tyre performance such as steering stability and the like. Such a belt is now an indispensable requirement for a radial tyre.

A known tyre comprising the features of the preamble of claim 1, and which presents a ratio Tr2/Tr1 between 1,2 and 1,5 (Tr1 being at 5% of the nominal pressure) is shown, e.g. in EP-A-0 194 108.

It is hence a primary object of the invention to provide a radial tyre for a passenger car having low fuel consumption and good ride comfort whilst using a steel belt structure and high internal pressure.

According to one aspect of the present invention a radial tyre for a passenger car comprises a carcass layer composed of carcass cords arranged substantially in the radial direction and extending through a tread part, side wall parts and wrapped at each edge of the carcass layer around a bead core in each of two beads from the inside to the outside of the tyre, and a belt layer composed of at least two belt plies, each comprising steel cords parallel to each other, arranged radially outside the carcass layer, wherein the tread part comprises a tread rubber having a base rubber layer arranged outside the belt layer, the loss factor tan $\delta$(b) of which is 0.03 to 0.08, and a cap rubber layer arranged outside the base rubber layer, the loss factor tan $\delta$(c) of which is 0.06 to 0.10 and is larger than the loss factor tan $\delta$(b) of the base rubber layer; the steel cord of the belt ply being composed of four or less steel filaments; and in a cross section of the tyre including the tyre's axis when the tyre is mounted on its specified rim, the ratio Tr2/Tr1 of the tread radius of curvature Tr2 when inflated to the specified internal pressure to the tread radius of curvature Tr1 when inflated to 2% of the specified internal pressure is 1.0 to 2.0.

Since the tread rubber is composed of two layers differing in loss factor, the low fuel consumption is obtained while maintaining the grip performance. If, however, the loss factor tan $\delta$(c) of the cap rubber layer is greater than 0.10 or the loss factor tan $\delta$(b) of the base rubber layer is greater than 0.08, the improved effect of low fuel consumption is not achieved. Although the grip performance of the tyre is largely affected by the tread pattern formed on the tread, if the loss factor tan $\delta$(c) of the cap rubber layer is smaller than 0.06, the grip performance is lowered too much to allow compensation by the tread pattern design. Also, by setting tan $\delta$(c) > tan $\delta$(b), the cap rubber layer contacting with the road surface exhibits good grip performance, and the base rubber layer which is arranged inwardly decreases the rolling resistance due to hysteresis loss.

The internal pressure causes tension to be applied to the cords of the belt layer. When the number of filaments of a cord is five or more, the circumferential rigidity of the entire belt layer is increased, and the curvature rigidity of the outer surface of the belt layer is also increased. As a result, the ride comfort is sacrificed by the lowering of envelope performance. Therefore, when the number of filaments is limited to four or less, then if used at high air pressure, loss of ride comfort is suppressed.

Furthermore, by defining the number of filaments as four or less, the traceability of the tread surface on the road surface changes is improved, and the shortage of grip which would be expected otherwise due to the loss factor tan $\delta$(c) of the cap rubber layer being limited to 0.10 or less is compensated.

Still more, since the ratio Tr2/Tr1 of the tread curvature radius Tr1 when inflated to 2% of specified internal pressure and the tread curvature radius Tr2 when inflated to the specified internal pressure is defined as 1.0 to 2.0 the radius of curvature of the tyre tread part increases due to inflation pressure. Thus, compressive strain is applied in the axial direction of the tyre to the tread rubber, and the characteristics of the tread rubber of low loss factor may be effectively obtained and seen, thus lowering the fuel consumption loss of the tread due to high speed travelling.

Changes of this tread shape due to internal pressure may be realised by adjusting the carcass shape, but when the number of filaments of the belt cord is five or more, the curvature rigidity of the outer surface of the belt layer becomes too large, and adequate changes can not be achieved.

Embodiments of the present invention will now be described, by way of example only, referring to the attached drawings in which:

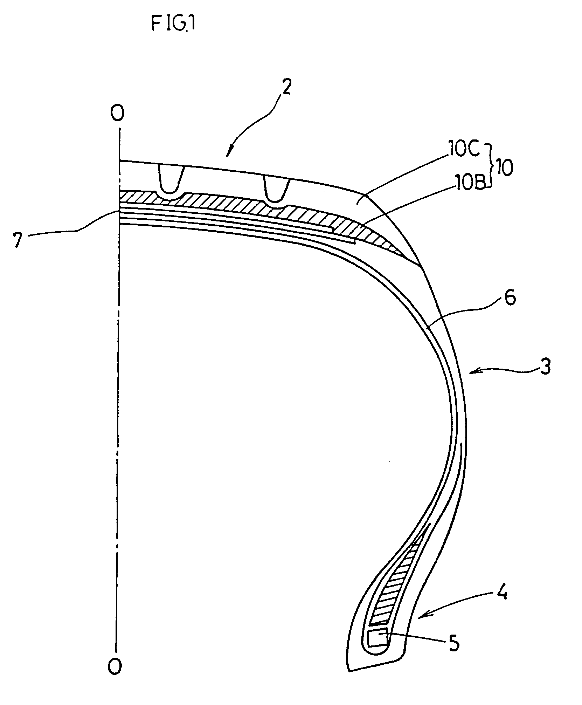

Figure 1 is a widthwise sectional view showing one half of an embodiment of the invention about the equatorial plane 0-0;

Figure 2(a), (b), (c) are sectional views showing the cords composition used in the invention; and

Figure 3 is a diagram showing the tread curvature radius.

The radial tyre 1 for a passenger car comprises a carcass 6 of carcass cords extending from a tread part 2 through side wall parts 3 and wrapped around a bead core 5 in each of two bead parts 4 from inside to outside of the tyre. The carcass cords are arranged substantially in the radial direction, in this embodiment at an angle of 75 to 90 degrees with respect to the tyre circumferential direction. The carcass cords may be made of polyester, nylon, aromatic polyamide, other organic fibre cords, or metallic cords. In this embodiment, the carcass 6 is formed by one simple ply so as to lower the rigidity of the side walls, and thus improve the ride comfort.

Radially outside the carcass 6 and inside the tread parts 2, there is a belt layer 7 composed of at least two belt plies each comprising steel cords arranged parallel to each other. In this embodiment, the belt layer 7 is composed of two belt plies, one is radially inside the other. The steel cords are at a small angle to the tyre circumferential direction, for example 10 to 30 degrees, and the steel cords of the adjacent plies are arranged to cross each other.

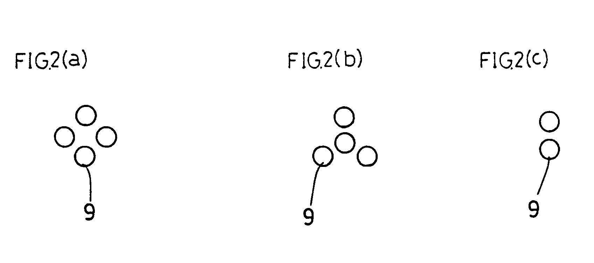

The steel cord is formed of four or less steel filaments 9 as shown in Figure 2(a), 2(b) or 2(c). Figure 2-(a) shows the structure of a 1x4 cord, Figure 2(b) shows the structure of a 1x3 cord and Figure 2(c) shows the structure of a 1x2 cord respectively.

The tyre of the invention in use is inflated with an air pressure (for example 230 to 250 kPa) higher than the ordinary internal pressure. Due to this high internal pressure, a large tension is applied to each cord of the belt layer 7. If the number of filaments of the cord was made five or more, then the circumferential rigidity of the entire belt layer 7 would be increased due to the tension from the air pressure, and the bending rigidity of the outer surface of the belt layer 7 is increased. As a result, the envelope performance is lowered, and the ride comfort is sacrificed. By particularly defining the number of steel filaments to be four or less, and preferably three or less, loss of ride comfort is suppressed even when used at high air pressure.

The tread part 2 comprises a tread rubber 10 disposed outside the belt layer 7 in the radial direction. The tread rubber 10 is composed of two layers, that is a base rubber 10B arranged radially inside and a cap rubber 10C arranged radially outside the base rubber 10B.

The loss factor $\tan \delta(c)$ of the cap rubber layer 10C is specified to be 0.06 to 0.10 and to be greater than the loss factor $\tan \delta(b)$ of the base rubber 10B. Also the loss tangent $\tan \delta(b)$ of the base rubber layer 10B is 0.03 to 0.08.

Here, the loss factor ($\tan \delta$) is the value measured by a visco-elasticity measuring apparatus of Iwamoto Seisakusho, in the conditions of temperature of 70°C, amplitude of 1.0%, and frequency of 10 Hz.

Since the tread rubber 10 is made of two different rubber layers (cap rubber layer 10C and base rubber layer 10B) and each layer has its own special loss factor, low fuel consumption is achieved while maintaining the grip performance. If the loss factor $\tan \delta(c)$ of the cap rubber layer 10C is made greater than 0.10 or if the loss factor $\tan \delta(b)$ of the base rubber layer 10B is made greater than 0.08, the effect of low fuel consumption is not obtained.

Besides, the grip performance of the tyre, although largely influenced by the tread pattern as mentioned above, is lowered if the loss factor $\tan \delta(c)$ if smaller than 0.06. Moreover, if the loss factor $\tan \delta(b)$ of the base rubber layer 10B is smaller than 0.03, it is too difficult to manufacture. Also the relation where $\tan \delta(b)$ < $\tan \delta(c)$ is defined so as to enhance the grip performance of the tyre by means of the cap rubber layer 10C, and decrease the rolling resistance due to hysteresis loss of the base rubber layer 10B.

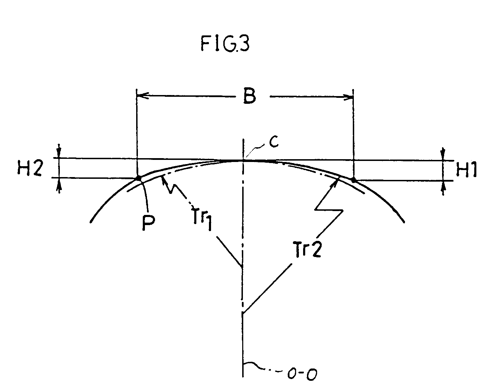

Furthermore, the ratio Tr2/Tr1 of the tread radius of curvature Tr1 when the tyre 1 is mounted on its specified rim and inflated to 2% of the specified internal pressure to the tread radius of curvature Tr2 when inflated to the specified internal pressure is 1.0 to 2.0. The curvature radius Tr is the radius of curvature of the tread surface passing through the tread outer surface on the tyre section including the tyre axis. As shown in Figure 3, it is determined by the following equation which includes the distances H1, H2 from the ground contact ends P to the line L drawn parallel to the tyre axis passing point C on the tread surface on the tyre equatorial plane 0-0, and the distance B between the ground contact ends P.

$$Tr = [B^2 + (H1 + H2)^2] / 4(H1 + H2)$$

The ground contact ends P are determined from the ground contact shape when the maximum standard load is applied by inflating the specified rim to its specified internal pressure.

Thus the ratio Tr2/Tr1 is defined in the range of 1.0 to 2.0 in order to lower the fuel consumption and prevent damage of the tread part due to high speed running. When the ratio Tr2/Tr1 exceeds 2.0, the rolling resistance is increased, and the object of the invention is not achieved. If less than 1.0, on the other hand, a tensile stress in the widthwise direction is applied to the tread from inflation pressure, probably inducing damage of the tread rubber or so-called chunking near the tyre equatorial plane while travelling at high speed, in particular. More preferably, the ratio of Tr2/Tr1 is set at 1.3 to 1.8.

Radial tyres in a tyre size of P165/70R13 were experimentally prepared with the tread rubber blends shown in Table 1 and specification in Table 2. These were tested in comparison with the reference examples shown in the same Tables.

In the Table, the rolling resistance ratio is the value of measurement in the standard maximum load condition, by a bench-top drum testing machine after fitting the tyres upon specified rims and adjusting the internal pressure to 240 kPa, expressed as a ratio taking the value of reference Example 1 as 100. The actual car ride comfort was a driver's functional evaluation running on a test course, with the tyres on the specified rims, internal pressure of 240 kPa and testing on a Japanese-made passenger car with a displacement of 1500 cc, expressed in comparison with reference Example 1 as 100. As the value of the rolling resistance ratio is smaller, it means the fuel consumption is lower, and as the value of the actual car ride comfort evaluation is greater, it means the result is better.

Both embodiments 1 and 2 presented excellent low fuel consumption performances, and embodiment 1 was also superior in ride comfort.

Table 1

| Blend | TA | TB | TC | TD | TE | TF |
|---|---|---|---|---|---|---|
| Natural rubber | 50 | 75 | 20 | 70 | 70 | 70 |
| SBR | 50 | 25 | 80 | 30 | 30 | 30 |
| Carbon black | 43 | 55 | 60 | 30 | 35 | 35 |
| Sulfur | 2.00 | 1.75 | 1.60 | 2.90 | 2.00 | 2.90 |
| Vulcanization accelerator | 1.3 | 1.0 | 1.0 | 1.1 | 1.3 | 1.1 |
| tan $\delta$ | 0.07 | 0.12 | 0.19 | 0.05 | 0.04 | 0.07 |

( Unit : PHR )

EP 0 435 620 B1

## Table 2

| | embodiment 1 | embodiment 2 | comparison 1 | comparison 2 |
|---|---|---|---|---|
| Tire size | P165/70R13 | P165/70R13 | P165/70R13 | P165/70R13 |
| Belt layer | | | | |
| cord composition | 1X2/0.3 | 1X4/0.22 | 1X5/0.2 | 1X4/0.22 |
| angle | 19 deg. | 19 deg. | 19 deg. | 19 deg. |
| width | 110mm/96mm | 110mm/96mm | 110mm/96mm | 110mm/96mm |
| number of cords driven | 40/5cm | 40/5cm | 40/5cm | 40/5cm |
| Tread | | | | |
| cap rubber layer 10C | TA | TA | TB | TC |
| base rubber layer 10B | TD | TE | TF | TF |
| Tread curvature radius | | | | |
| Tr1 | 240 | 240 | 240 | 240 |
| Tr2 | 400 | 400 | 400 | 500 |
| Tr2/Tr1 | 1.67 | 1.67 | 1.67 | 2.08 |
| Rolling resistance ratio | 65 | 60 | 100 | 110 |
| Actual car riding comfort evaluation | 120 | 110 | 100 | 110 |

## Claims

1. A radial tyre for a passenger car comprising a carcass layer (6) comprising carcass cords arranged substantially in the radial direction and extending through a tread part (2), side wall parts (3) and wrapped at each edge of the carcass layer (6) around a bead core (5) in each of two beads (4) from the inside to the outside of the tyre, and a belt layer (7) composed of at least two belt plies, each comprising steel cords parallel to each other, arranged radially outside the carcass layer (6), characterised by the tread part (2) comprising a tread rubber (10) having a base rubber layer (10B) arranged outside the belt layer (7), the loss factor tan δ(b) of which is 0.03 to 0.08, and a cap rubber layer (10C) arranged outside the base rubber layer (10B), the loss factor tan δ(c) of which is 0.06 to 0.10 and is larger than the loss factor tan δ(b) of the base rubber layer (10B); the steel cord of the belt ply comprising four or less steel filaments (9); and in a cross section of the tyre including the tyre's axis (00) when the tyre is mounted on its specified rim, the ratio Tr2/Tr1 of the tread radius of curvature Tr2 when inflated to the specified internal pressure to the tread radius of curvature Tr1 when inflated to 2% of the specified internal pressure is 1.0 to 2.0.

2. A tyre according to claim 1 characterised in that the ratio Tr2/Tr1 is in the range of 1.3 to 1.8.

5

**Patentansprüche**

1. Ein Radialreifen für einen Personenkraftwagen mit einer Karkassenschicht (6), welche Karkassencorde umfaßt, die im wesentlichen in der radialen Richtung angeordnet sind und sich durch einen Laufflächenteil (2) und Seitenwandteile (3) erstrecken und an jeder Kante der Karkassenschicht (6) um einen Wulstkern (5) in jedem von zwei Wülsten (4) von der Innenseite zur Außenseite des Reifens herumgewickelt sind, und einer Gürtelschicht (7), die aus wenigstens zwei Gürtellagen zusammengesetzt ist, die jede zueinander parallele Stahlcorde umfaßt, die radial außerhalb der Karkassenschicht (6) angeordnet sind,

   dadurch **gekennzeichnet,**

   daß der Laufflächenteil (2) ein Laufflächengummi (10) umfaßt, das eine Basisgummischicht (10B), die außerhalb der Gürtelschicht (7) angeordnet ist, deren Verlustfaktor tan $\delta$(b) 0.03 bis 0.08 beträgt, und eine Kronengummischicht (10C) besitzt, die außerhalb der Basisgummischicht (10B) angeordnet ist, deren Verlustfaktor tan $\delta$(c) 0.06 bis 0.10 beträgt und größer als der Verlustfaktor tan $\delta$(b) der Basisgummischicht (10B) ist; wobei der Stahlcord der Gürtellage vier oder weniger Stahlfilamente (9) umfaßt; und in einem die Achse (00) des Reifens einschließenden Querschnitt des Reifens, wenn der Reifen an seiner spezifizierten Felge angebracht ist, das Verhältnis Tr2/Tr1 des Laufflächenkrümmungsradius Tr2, wenn auf den spezifizierten Innendruck aufgepumpt, zum Laufflächenkrümmungsradius Tr1, wenn auf 2% des spezifizierten Innendrucks aufgepumpt, 1.0 bis 2.0 beträgt.

2. Ein Reifen nach Anspruch 1,
   dadurch **gekennzeichnet,**
   daß das Verhältnis Tr2/Tr1 im Bereich von 1.3 bis 1.8 liegt.

**Revendications**

1. Pneumatique à carcasse radiale pour véhicule de transport de passagers, comprenant une couche (6) de carcasse qui comporte des câblés de carcasse placés pratiquement dans la direction radiale et disposés dans une partie (2) de bande de roulement et des parties (3) de flanc et enroulés à chaque bord de la couche (6) de carcasse autour d'une tringle (5) placée dans chacun de deux talons (4), de l'intérieur vers l'extérieur du pneumatique, et une couche (7) de ceinture composée d'au moins deux nappes de ceinture, chacune comprenant des câblés d'acier parallèles mutuellement, disposés radialement à l'extérieur de la couche de carcasse (6), caractérisé en ce que la partie (2) de bande de roulement comporte un caoutchouc (10) de bande de roulement ayant une couche de caoutchouc de base (10B) placée à l'extérieur de la couche de ceinture (7), le facteur de pertes tg$\delta$(b) de ce caoutchouc étant compris entre 0,03 et 0,08, et une couche (10C) de caoutchouc de revêtement placée à l'extérieur de la couche (10B) de caoutchouc de base, le facteur de pertes tg$\delta$(c) de ce caoutchouc étant compris entre 0,06 et 0,10 et étant supérieur au facteur de pertes tg$\delta$(b) de la couche (10B) de caoutchouc de base, le câblé d'acier de la nappe de ceinture comprend quatre filaments (9) d'acier ou moins, et, dans une coupe du pneumatique contenant l'axe du pneumatique (OO) et lorsque le pneumatique est monté sur la jante spécifiée, le rapport Tr2/Tr1 du rayon de courbure de la bande de roulement Tr2 gonflée à la pression interne spécifiée au rayon de courbure de la bande de roulement Tr1 gonflée à 2 % de la pression interne spécifiée est compris entre 1,0 et 2,0.

2. Pneumatique selon la revendication 1, caractérisé en ce que le rapport Tr2/Tr1 est compris entre 1,3 et 1,8.

FIG.1

FIG.2(a)

FIG.2(b)

FIG.2(c)

FIG.3